# FASCICULE DE BREVET EUROPEEN

(11) **EP 4 028 721 B1**
(45) Date de publication et mention de la délivrance du brevet: **08.11.2023**
(21) Numéro de dépôt: 20764097.0
(22) Date de dépôt: 02.09.2020
(51) Int. Cl.: G01B 11/16

(54) **PROCEDE DE MESURE DE LA DEFORMATION D'UNE CONDUITE SOUS-MARINE PAR INTERFEROMETRIE**
VERFAHREN ZUR INTERFEROMETRISCHEN MESSUNG DER VERFORMUNG EINER UNTERWASSER-PIPELINE
METHOD FOR MEASURING THE DEFORMATION OF AN UNDERWATER PIPELINE BY INTERFEROMETRY

(30) Priorité: 13.09.2019 FR 1910141
(43) Date de publication de la demande: 20.07.2022
(73) Titulaire: IFP Energies nouvelles, 92852 Rueil-Malmaison (FR)
(72) Inventeur: FROT, Didier, 92852 RUEIL-MALMAISON CEDEX (FR); GAINVILLE, Martin, 92852 RUEIL-MALMAISON CEDEX (FR)
(74) Mandataire: IFP Energies nouvelles
(86) Numéro de dépôt international: PCT/EP2020/074407
(87) Numéro de publication internationale: WO 2021/047969

(56) Documents cités:
- DE-U1- 29 924 939
- RU-C1- 2 260 742
- US-A- 4 591 996
- US-A1- 2010 257 949
- GLENN A LANAN ET AL: "Fiber Optic Leak Detection Systems for Subsea Pipelines", OFFSHORE TECHNOLOGY CONFERENCE, 30 avril 2012 (2012-04-30), XP055465593, DOI: 10.4043/23070-MS ISBN: 978-1-61399-200-5
- BERTHOLD J W: "DETECTION OF FLOWLINE BLOCKAGE USING BRAGG GRATING SENSORS", PROCEEDINGS OF SPIE/ IS & T,, vol. 3541, 1 janvier 1999 (1999-01-01), pages 8-17, XP001106811, DOI: 10.1117/12.339076 ISBN: 978-1-62841-730-2

## Description

### Domaine technique

La présente invention concerne le domaine de la mesure de la déformation d'une conduite sous-marine, en particulier pour la localisation d'un bouchon d'hydrates et/ou de paraffines formé dans une conduite sous-marine de production d'hydrocarbures ou de gaz à condensat ou d'injection de gaz.

Dans le domaine de la production pétrolière offshore (en mer), des bouchons d'hydrates et/ou de paraffines peuvent se former dans les conduites de production sous-marines et les conséquences de tels bouchons sont un arrêt prolongé de la production, étant coûteux, et pouvant conduire à l'abandon de la ligne de production ou à sa détérioration lorsque les opérations de remédiation impliquent des contraintes mécaniques importantes sur la conduite (dépressurisation conduisant à la propulsion rapide du bouchon de l'anglais « plug run-away » ou chauffage local avec surpression due à la dissociation confinée des hydrates).

Afin de limiter ces problèmes et d'intervenir de façon efficace pour déboucher les lignes, il est important de localiser ces bouchons dans les conduites sous-marines.

De plus, pour le domaine de la production pétrolière offshore ainsi que pour les autres domaines utilisant des conduites sous-marines, il est également important de surveiller les conduites sous-marines, notamment en termes d'usure ou de fatigue, qui peuvent être dues à des contraintes mécaniques. Une possibilité de cette surveillance est la détermination de la déformation des conduites sous-marines. Il en est de même pour les conduites enterrées onshore (sous terre).

Pour ces deux applications (localisation des bouchons et surveillance), différentes difficultés existent pour caractériser la déformation des conduites sous-marines. La principale difficulté est le milieu marin dans lequel doit se faire cette détection ou cette surveillance : les moyens mis en oeuvre doivent être mis en oeuvre dans un milieu aqueux et potentiellement à grande profondeur. Une autre difficulté réside dans le fait que les conduites sous-marines peuvent être de différents types : les moyens mis en oeuvre doivent fonctionner quel que soit le type de conduite, et notamment même si la conduite sous-marine comporte un revêtement extérieur en matière polymère ou autre. Une autre problématique soulevée pour ces applications est la possibilité que la conduite sous-marine soit totalement ou partiellement enfouie dans les sédiments du fond marin.

### Technique antérieure

L'interférométrie fait partie des techniques utilisés pour mesurer les déformations de divers objets, dont les conduites. Les brevets US 4,591,996 et CN 108007375 décrivent des méthodes basées sur l'utilisation d'une interféromètrie de Speckle. Toutefois, ces méthodes ne sont pas adaptées à être utilisées dans un milieu sous-marin, et sont complexes à mettre en oeuvre. En particulier, la méthode décrite dans le brevet CN 108007375 nécessite plusieurs sources et nécessite que l'objet à étudier soit dans un milieu sous vide. En outre, ces méthodes ne peuvent pas fonctionner si l'objet à étudier est recouvert d'un revêtement extérieur ou s'il est partiellement ou totalement enfoui.

L'article de Glenn A Lanan et al: "Fiber Optic Leak Détection Systems for Subsea Pipelines", Offshore Technology Conférence, 30 avril 2012 (XP055465593, DOI: 10.4043/23070-MSISBN: 978-1-61399-200-5) décrit un procédé de mesure de déformation d'une conduite sous-marine par analyse de signaux rétrodiffusés dans une fibre optique placée sur la conduite.

### Résumé de l'invention

La présente invention a pour but de mesurer la déformation d'une conduite sous-marine, même si celle-ci comporte un revêtement, ou si celle-ci est totalement ou partiellement enfouie, sans mettre en oeuvre des moyens coûteux d'excavation de la conduite. Pour cela, la présente invention concerne un procédé de mesure de la déformation d'une conduite sous-marine, dans lequel on émet une onde électromagnétique vers la conduite sous-marine, cette onde électromagnétique est réfléchie par une couche métallique de la conduite sous-marine, et on analyse l'onde électromagnétique réfléchie pour en déduire la déformation de la conduite sous-marine. Un tel procédé (en particulier l'émission des ondes électromagnétiques) peut être mis en oeuvre dans un milieu sous-marin fortement absorbant, étant donné que le signal exploité est le déplacement d'une figure d'interférence et non l'amplitude des franges brillantes. De plus, les ondes électromagnétiques ne pénètrent pas dans la conduite sous-marine, grâce à la couche métallique de celle-ci qui permet une réflexion d'une amplitude élevée conduisant à une figure d'interférences très contrastée, par conséquent facilement exploitable.

En outre, l'invention concerne un procédé de détection de bouchon dans une conduite sous-marine, en mettant en oeuvre le procédé de mesure de la déformation d'une conduite sous-marine.

L'invention concerne un procédé de mesure de la déformation d'une conduite sous-marine, notamment une conduite de transport d'hydrocarbures, ladite déformation résultant d'une variation de contrainte mécanique de ladite conduite sous-marine, ladite conduite sous-marine comportant au moins une couche métallique, Pour ce procédé, on met en oeuvre les étapes suivantes :
a) On émet une onde électromagnétique vers ladite conduite sous-marine ;
b) On mesure l'onde électromagnétique réfléchie par ladite couche métallique de ladite conduite sous-marine au moyen d'un interféromètre à au moins deux instants ; et
c) On compare ladite onde électromagnétique réfléchie par ladite couche métallique de ladite conduite sous-marine auxdits deux instants pour déterminer une déformation de ladite conduite sous-marine.

Selon un mode de réalisation, ledit procédé de mesure comporte une étape préalable d'installation d'un système optique comprenant un émetteur d'onde électromagnétique et un interféromètre à proximité de ladite conduite sous-marine.

Avantageusement, ledit système optique est fixe ou mobile.

Selon un aspect de l'invention, on émet une onde électromagnétique dans le domaine infrarouge, de préférence avec une longueur d'onde comprise entre 0.6 et 1.5 µm.

Selon une caractéristique ; on mesure l'onde électromagnétique réfléchie au moyen d'un interféromètre de type Michelson.

Conformément à un mode de réalisation, ledit procédé de mesure comporte une étape de sollicitation en pression ou en température de ladite conduite sous-marine pour générer ladite déformation de ladite conduite.

De préférence, on sollicite en pression ladite conduite sous-marine au moyen d'un système d'émission acoustique à basse fréquence ou de fluctuation de pression à une extrémité de ladite conduite sous-marine.

En variante on génère une déformation de ladite conduite par dissociation d'un bouchon formé dans ladite conduite sous-marine.

En outre, l'invention concerne un procédé de détermination de la présence d'un bouchon formé dans ladite conduite sous-marine, notamment un bouchon d'hydrates et/ou de paraffines formé dans une conduite de transport des hydrocarbures, dans lequel on met en oeuvre les étapes suivantes :
a) On sollicite en pression ou en température ladite conduite sous-marine ;
b) On mesure la déformation de ladite conduite sous-marine en au moins un point de mesure au moyen du procédé selon l'une des caractéristiques précédentes ;
c) On détermine la présence d'un bouchon entre le point de sollicitation en pression ou température et ledit point de mesure si la déformation de ladite conduite audit au moins un point de mesure n'est pas synchrone avec ladite sollicitation en pression ou en température.

Selon une mise en oeuvre, on détermine une absence de bouchon entre le point de sollicitation en pression ou température et ledit point de mesure si la déformation de ladite conduite audit au moins un point de mesure est synchrone avec ladite sollicitation en pression ou en température.

Conformément à un aspect, on détermine la position d'un bouchon dans ladite conduite sous-marine en réalisant plusieurs mesures de déformation en plusieurs points de mesures, ledit bouchon étant situé entre deux points de mesure pour lesquels lesdites déformations de ladite conduite sous-marine sont distinctes.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre la mesure par interférométrie selon un mode de réalisation de l'invention.
La figure 2 illustre un dispositif de mesure apte à mettre en oeuvre le procédé de mesure selon un mode de réalisation de l'invention.
La figure 3 illustre la mise en oeuvre du procédé de détermination de la présence d'un bouchon selon un mode de réalisation de l'invention.

### Description des modes de réalisation

La présente invention concerne un procédé de mesure de la déformation d'une conduite sous-marine. La déformation de la conduite sous-marine peut résulter d'une variation de contrainte mécanique appliquée à la conduite sous-marine (de manière imposée ou de manière intrinsèque à la conduite sous-marine). La déformation de la conduite sous-marine peut notamment être un gonflement, c'est-à-dire une augmentation du diamètre de la conduite sous-marine. La conduite sous-marine peut comporter un gaz et/ou un liquide et/ou un solide. Ainsi, le principe peut correspondre au suivi de la déformée d'une propagation de pression le long de la conduite afin de localiser le blocage. De préférence, la conduite sous-marine peut être une conduite de transport d'hydrocarbures ou de gaz à condensats produits en mer. Toutefois, l'invention concerne tout type de conduite sous-marine, par exemple des conduites électriques, des conduites de transport de fluides.

La conduite sous-marine comporte au moins une couche métallique, par exemple en acier. Cette couche métallique permet notamment la résistance à la pression (interne et/ou externe) de la conduite sous-marine. La conduite sous-marine peut comporter d'autres couches, par exemple un revêtement en polymère, un isolant, etc. Le procédé de mesure selon l'invention est adapté à mesurer la déformation de la couche métallique de la conduite sous-marine, même si celle-ci est recouverte d'autres couches non métalliques (par exemple en polymère). De plus, par sa masse et par la constitution des fonds marins par des sédiments, la conduite sous-marine peut être partiellement ou totalement enfouie. Le procédé de mesure selon l'invention est adapté à mesurer la déformation de la conduite sous-marine.

Selon l'invention, le procédé de mesure de la déformation met en oeuvre les étapes suivantes :
- Emission d'une onde électromagnétique dirigée vers la conduite sous-marine,
- Mesure de l'onde électromagnétique réfléchie par la couche métallique de la conduite sous-marine au moyen d'un interféromètre, à au moins deux instants,
- Comparaison des mesures de l'onde électromagnétique réfléchies aux deux instants pour déterminer la déformation de la conduite sous-marine.

En effet, la surface extérieure de la couche métallique permet de réfléchir l'onde électromagnétique émise vers un interféromètre. Lors d'une déformation de la conduite sous-marine (et par conséquent un déplacement de la couche métallique) la figure des interférences mesurées est déplacée. Ainsi, une comparaison entre une mesure d'interférence sans déformation de la conduite sous-marine (premier instant de mesure) et une mesure d'interférence avec déformation de la conduite sous-marine (deuxième instant de mesure) est possible. De plus, cette comparaison permet aisément de déterminer la longueur de déplacement (donc de déformation) de la conduite sous-marine.

En outre, étant donné que l'onde électromagnétique traverse le polymère et les sédiments, le procédé selon l'invention est adapté à tous les types de conduites sous-marines et aux conduites sous-marines enfouies.

Un tel procédé (en particulier l'émission des ondes électromagnétiques) peut être mis en oeuvre dans un milieu sous-marin, étant donné que le signal exploité est le déplacement d'une figure d'interférence et non l'amplitude des franges brillantes (l'amplitude des ondes électromagnétiques est atténuée par le milieu marin et par conséquent n'est pas directement exploitable). De plus, les ondes électromagnétiques ne pénètrent pas dans la conduite sous-marine grâce à la couche métallique de celle-ci, qui permet une réflexion lumineuse d'une amplitude élevée conduisant à une figure d'interférences très contrastée, par conséquent facilement exploitable.

Selon un mode de réalisation de l'invention, l'émission d'une onde électromagnétique dirigée vers la conduite sous-marine peut être réalisée dans le domaine de l'infrarouge. En effet, ce type d'onde électromagnétique permet des bonnes mesures dans le milieu marin, y compris en présence de sédiments recouvrant la conduite sous-marine. De préférence, la longueur d'onde de l'onde électromagnétique peut être comprise entre 0.6 et 1.5 µm.

Conformément à une mise en oeuvre de l'invention, on peut réaliser la mesure de l'onde électromagnétique au moyen d'un interféromètre de type Michelson, qui présente l'avantage d'être simple, précis et répandu.

Selon une option de réalisation, on peut déterminer la déformation de la conduite sous-marine par analyse du déplacement de la figure d'interférence.

Selon un mode de réalisation de l'invention, le procédé de mesure peut comprendre une étape préalable d'installation d'un système optique à proximité de la conduite sous-marine. L'installation peut être définitive, dans ce cas le système optique est dit « fixe ». Il peut alors avoir la forme d'un boîtier. Ce premier cas favorise la répétabilité des mesures. Alternativement, l'installation peut être ponctuelle le temps d'une mesure de déformation, dans ce cas, le système optique est dit « mobile ». Bien que mobile, le système optique reste immobile pendant les mesures : le système se déplace uniquement entre les mesures. Afin d'assurer l'immobilisation pendant la mesure, il peut être prévu des supports aptes à se poser sur le fonds marin sans enfoncement pendant la mesure et possédant une grande surface de contact. Cette deuxième alternative favorise la mesure de la déformation de la conduite sous-marine en plusieurs points de la conduite sous-marine. Dans cette configuration, le système optique peut être déplacé par un vaisseau sous-marin.

Le système optique comporte un émetteur d'onde électromagnétique et un interféromètre. En outre, le système optique peut comporter des moyens de comparaison des mesures d'onde électromagnétique réfléchie.

De préférence, le système optique peut être placé à proximité (c'est-à-dire à quelques centimètres) de la conduite sous-marine. Ainsi, on diminue significativement l'atténuation de des ondes électromagnétiques lors de leur propagation dans l'eau de mer. Cela permet une mesure précise. De plus, on peut s'affranchir des effets du courant marin.

Le procédé selon l'invention permet de déterminer une déformation d'une conduite sous-marine, quelle que soit la cause de cette déformation.

Selon un premier mode de réalisation, la déformation de la conduite sous-marine peut être due à une sollicitation en pression ou en température. Cette sollicitation génère une contrainte mécanique dans la conduite sous-marine. Pour ce mode de réalisation, on peut solliciter en pression la conduite sous-marine par exemple au moyen d'un système d'émission acoustique à basse fréquence ou de fluctuation de pression. De préférence, ce système d'émission acoustique peut être disposé à proximité d'une extrémité de la conduite sous-marine. Par exemple, pour initier un déplacement de la conduite sous-marine, un signal avec une amplitude de quelques bars (par exemple 10 bars soit 1MPa). En effet, un tel signal génère une déformation de la conduite sous-marine de l'ordre de 10 à 100 µm, une telle déformation peut être aisément mesurée par interférométrie dans le domaine visible et/ou proche infrarouge.

Selon un deuxième mode de réalisation, la déformation de la conduite sous-marine peut être due à un phénomène physique au coeur de la conduite sous-marine. Par exemple, la déformation de la conduite sous-marine peut être liée à la dissociation d'un bouchon (par exemple un bouchon d'hydrates et/ou de paraffines dans le cas d'une conduite de transport des hydrocarbures), qui génère des variations de pression dans la conduite, ces variations de pression déformant la conduite sous-marine.

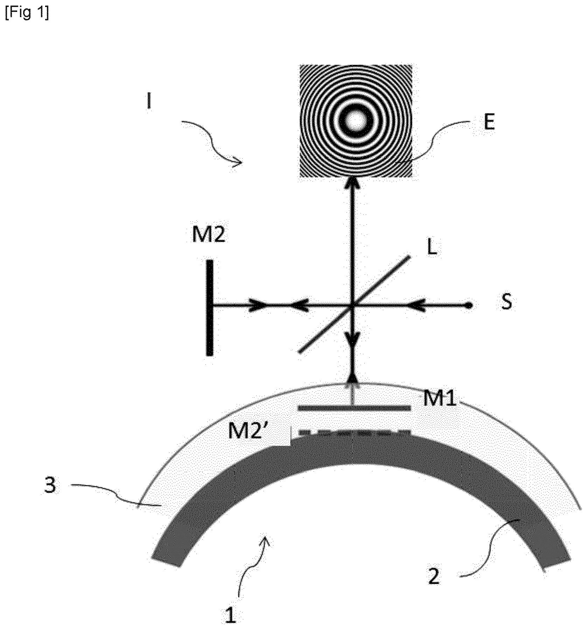

La figure 1 illustre, schématiquement et de manière non limitative, un interféromètre de Michelson utilisé dans le cadre du procédé de mesure selon un mode de réalisation de l'invention. Pour mesurer la déformation d'une conduite sous-marine 1, un interféromètre I est placé à proximité de la conduite sous-marine 1. La conduite sous-marine 1 comporte une couche métallique 2 et une couche de recouvrement 3, par exemple une couche en matériau polymère. De manière connue, l'interféromètre I comporte une source S d'onde électromagnétique, une lame séparatrice L, un miroir M2, et une surface de mesure E, sur laquelle se forme la figure d'interférence. L'onde électromagnétique émise par la source S traverse la lame séparatrice L soit en direction du miroir M2, soit en direction de la conduite sous-marine 1. L'onde électromagnétique est réfléchie par la surface extérieure de la couche métallique 2 de la conduite sous-marine 1 formant ainsi une surface de réflexion M2'. Cette surface de réflexion M2' est la surface extérieure de la couche métallique 2. L'onde réfléchie par le miroir M2 et par la surface de réflexion M2' sont alors dirigées vers la surface de mesure de E pour former la figure d'interférences. Lorsque la conduite sous-marine 1 est déformée, le diamètre extérieur de la couche métallique 2 augmente. La surface de réflexion se déplace alors, la surface de réflexion après la déformation est notée M1. Il en résulte que la distance parcourue par l'onde électromagnétique diffère, ce qui entraîne une variation de la figure d'interférences sur la surface de mesure E. La distance entre les points M1 et M2' peut être de l'ordre de 15µm.

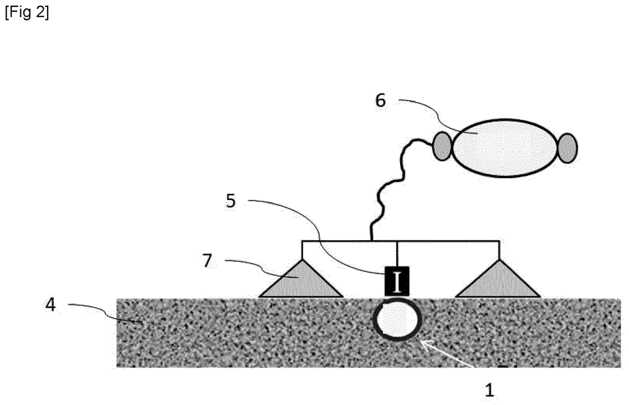

La figure 2 illustre, schématiquement et de manière non limitative, l'installation d'un interféromètre 5 à proximité d'une conduite sous-marine 1 pour le procédé selon un mode de réalisation de l'invention. La conduite sous-marine 1 est enfouie dans des sédiments 4. Pour ce mode de réalisation, le système optique (l'interféromètre 5) est relié (par exemple par une fibre optique) à un vaisseau sous-marin 6. Le système optique 5 comprend des supports de stabilisation 7 prévues pour assurer l'immobilisation du système optique 5 sans enfoncement de celui-ci pendant la mesure.

En outre, la présente invention concerne un procédé de détermination de la présence d'un bouchon dans une conduite sous-marine. On appelle bouchon, tout élément pseudo-solide qui obstrue partiellement ou totalement une section de la conduite sous-marine. Dans la suite de la description, un bouchon sera considéré comme bouchant totalement une section la conduite de façon étanche. Dans le domaine des conduites de transport d'hydrocarbures, un bouchon peut par exemple être formé d'hydrates et/ou de paraffines. De tels bouchons peuvent se former lors de l'arrêt de la production d'hydrocarbures en raison des conditions de pression et de température dans le milieu marin.

Pour ce procédé de détermination de la présence d'un bouchon, on met en oeuvre les étapes suivantes :
- On sollicite en pression ou en température la conduite sous-marine en un point de la conduite sous-marine, appelé point de sollicitation, par exemple au moyen d'un système capable de modifier la pression interne de la conduite de façon cyclique ou non placé à une extrémité de la conduite sous-marine,
- On mesure la déformation de la conduite sous-marine en au moins un point de mesure au moyen du procédé selon l'une quelconque des variantes ou des combinaisons de variantes décrites ci-dessus, en d'autres termes, on positionne un interféromètre en au moins un point de mesure, et on compare les ondes électromagnétiques réfléchies par la couche métallique de la conduite sous-marine, avec et sans la sollicitation en pression ou en température, et on en déduit une éventuelle déformation de la conduite sous-marine,
- On détermine la présence d'un bouchon entre le point de sollicitation et le point de mesure si la déformation de la conduite au point de mesure est nulle ou faible et à fortiori asynchrone avec la sollicitation générée.

En effet, la présence d'un bouchon dans la conduite sous-marine, va modifier le comportement de la conduite sous-marine en aval du bouchon.

Grâce à ce procédé, on peut aussi déterminer une absence de bouchon entre le point de sollicitation et le point de mesure si la déformation de la conduite au point de mesure est non nulle et synchrone avec la sollicitation générée.

Selon un mode de réalisation de l'invention, on peut déterminer la position d'un bouchon dans une conduite sous-marine en réalisant plusieurs mesures de déformation en plusieurs points de mesures. Dans ce cas, le bouchon est positionné dans la conduite sous-marine entre deux points de mesure adjacents pour lesquels les déformations de la conduite sous-marine sont distinctes. En d'autres termes, le bouchon est positionné entre le dernier point de mesure (en partant du point de sollicitation) pour lequel la déformation est synchrone avec la sollicitation générée, et le premier point de mesure (en partant du point de sollicitation) pour lequel la déformation est nulle ou faible et asynchrone avec la sollicitation générée.

Afin d'améliorer la détermination de la position du bouchon, on peut répéter ces mesures à des points de mesure situés entre le dernier point de mesure (en partant du point de sollicitation) pour lequel la déformation est synchrone avec la sollicitation générée, et le premier point de mesure (en partant du point de sollicitation) pour lequel la déformation nulle ou faible et asynchrone avec la sollicitation générée.

Ainsi, selon une mise en oeuvre de l'invention, le procédé de détermination de la position d'un bouchon dans une conduite sous-marine peut comprendre les étapes suivantes :
1) En l'absence de contrainte mécanique (sans sollicitation de la conduite sous-marine), on mesure, au moyen d'un interféromètre, la distance relative, notée M'2 (par exemple conformément à la figure 1), qui sépare l'interféromètre de l'extrémité supérieure de la couche métallique de la conduite sous-marine, et on enregistre ainsi une référence stable.
2) Ensuite en présence d'une contrainte mécanique, réalisée à une fréquence connue, on sollicite en pression la conduite sous-marine, pouvant contenir un mélange de fluide fait d'un liquide ou solide (incompressible) et d'un gaz (compressible), bouché en un point de l'espace non connu et dont on souhaite déterminer la position.
3) Durant l'épreuve de cette contrainte mécanique de la conduite sous-marine, de l'étape 2, on mesure, au moyen de l'interféromètre la distance relative, notée M1 (par exemple conformément à la figure 1), qui sépare l'interféromètre de l'extrémité supérieure de la couche métallique de la conduite sous-marine, et on enregistre un déplacement synchrone ou non-synchrone traduisant respectivement le gonflement ou le non-gonflement de la conduite sous-marine sollicitée en pression.
   a. Si le déplacement est synchrone avec la surpression (sollicitation imposée) signifiant que la conduite sous-marine se dilate, c'est que le point de mesure se trouve en aval de la conduite par rapport au bouchon soit dans la partie communicante avec le point de sollicitation en pression.
   b. Si le déplacement ne peut être déterminé ou faible et non synchrone avec la surpression appliquée (sollicitation imposée), c'est que le point de mesure se trouve en amont de la conduite par rapport au bouchon et à l'endroit de sollicitation.

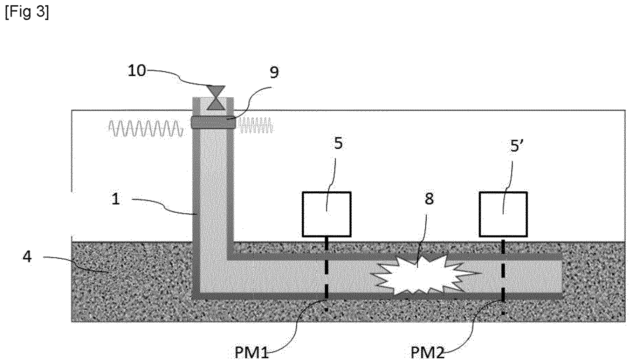

La figure 3 illustre, schématiquement et de manière non limitative, la mise en oeuvre du procédé de détermination de présence d'un bouchon selon un mode de réalisation de l'invention. Pour l'exemple illustré, la conduite sous-marine comporte une première extrémité pourvue d'une vanne 10, une partie verticale descendant jusqu'au fond marin, et une partie horizontale enfouie dans des sédiments 4. Pour cet exemple, on suppose un bouchon 8 formé dans la partie horizontale de la conduite sous-marine 1. Pour déterminer la présence d'un bouchon, on utilise un système d'émission acoustique 9 et deux systèmes optiques 5 et 5'. Le système d'émission acoustique 9 génère une onde acoustique haute fréquence (les ondes acoustiques émises sont représentées schématiquement par des sinusoïdes) à l'extrémité de la conduite sous-marine, à proximité de la vanne 10. Les systèmes optiques 5 et 5' comportent un émetteur d'onde électromagnétique et un interféromètre (par exemple selon le mode de réalisation de la figure 1). Ils sont placés à proximité de la conduite sous-marine 1, respectivement aux points de mesure PM1 et PM2. Ces systèmes optiques 5 et 5' peuvent être « fixe » ou « mobile ». Selon une option de réalisation, le système optique 5' peut être le système optique 5 qui a été déplacé au point de mesure PM2 après avoir fait la mesure au point de mesure PM1.

Pour le procédé selon l'invention, on réalise une première mesure de déformation de la conduite sous-marine 1 aux points PM1 et PM2, à un premier instant sans sollicitation par le système d'émission acoustique 9. On réitère ces mesures aux points de mesure PM1 et PM2 à un deuxième instant après démarrage du système d'émission acoustique 9. Pour chaque point de mesure, on compare les mesures au premier instant et au deuxième instant, et on vérifie si les mesures sont synchrones au non avec la sollicitation du système d'émission acoustique 9. Dans le cas illustré, l'interféromètre 5 au point de mesure PM1 est situé entre le point de sollicitation du système d'émission acoustique 9 et le bouchon 8, alors les mesures résultantes sont synchrones avec la sollicitation du système d'émission acoustique 9. De plus, l'interféromètre 5' au point de mesure PM2 est placé après le bouchon 8, alors les mesures résultantes ne sont pas synchrones avec la sollicitation du système d'émission acoustique 9. Ainsi, avec ces résultats, on peut en déduire que le bouchon est situé entre les points de mesure PM1 et PM2.

De plus, la présente invention concerne un procédé de surveillance d'une conduite sous-marine mettant en oeuvre le procédé de mesure de la déformation d'une conduite sous-marine selon l'une quelconque des variantes ou des combinaisons de variantes décrites dans la présente demande. Le procédé de surveillance peut comporter une étape de détermination de l'usure ou de la fatigue de la conduite sous-marine à partir de la mesure de la déformation de la conduite sous-marine.

Comme il va de soi, l'invention ne se limite pas aux seules formes de réalisation décrites ci-dessus à titre d'exemple, elle embrasse au contraire l'étendue définie par les revendications ci-jointes.

## Revendications

1. Procédé de mesure de la déformation d'une conduite sous-marine (1), notamment une conduite de transport d'hydrocarbures, ladite déformation résultant d'une variation de contrainte mécanique de ladite conduite sous-marine (1), ladite conduite sous-marine (1) comportant au moins une couche métallique (2), **caractérisé en ce qu'**on met en oeuvre les étapes suivantes :
a) On émet une onde électromagnétique vers ladite conduite sous-marine (1) ;
b) On mesure l'onde électromagnétique réfléchie par ladite couche métallique (2) de ladite conduite sous-marine (1) au moyen d'un interféromètre (I) à au moins deux instants ; et
c) On compare ladite onde électromagnétique réfléchie par ladite couche métallique (2) de ladite conduite sous-marine (1) auxdits deux instants pour déterminer une déformation de ladite conduite sous-marine (1).

2. Procédé de mesure selon la revendication 1, dans lequel ledit procédé de mesure comporte une étape préalable d'installation d'un système optique comprenant un émetteur d'onde électromagnétique (S) et un interféromètre (I) à proximité de ladite conduite sous-marine (1).

3. Procédé de mesure selon la revendication 2, dans lequel ledit système optique est fixe ou mobile.

4. Procédé de mesure selon l'une des revendications précédentes, dans lequel on émet une onde électromagnétique dans le domaine infrarouge, de préférence avec une longueur d'onde comprise entre 0.6 et 1.5 µm.

5. Procédé de mesure selon l'une des revendications précédentes, dans lequel on mesure l'onde électromagnétique réfléchie au moyen d'un interféromètre (I) de type Michelson.

6. Procédé de mesure selon l'une des revendications précédentes, dans lequel ledit procédé de mesure comporte une étape de sollicitation en pression ou en température de ladite conduite sous-marine (1) pour générer ladite déformation de ladite conduite sous-marine (1).

7. Procédé de mesure selon la revendication 6, dans lequel on sollicite en pression ladite conduite sous-marine (1) au moyen d'un système d'émission acoustique (9) à basse fréquence ou de fluctuation de pression à une extrémité de ladite conduite sous-marine.

8. Procédé de mesure selon l'une des revendications 1 à 5, dans lequel on génère une déformation de ladite conduite par dissociation d'un bouchon formé dans ladite conduite sous-marine (1).

9. Procédé de détermination de la présence d'un bouchon formé dans ladite conduite sous-marine (1), notamment un bouchon d'hydrates et/ou de paraffines formé dans une conduite de transport des hydrocarbures, dans lequel on met en oeuvre les étapes suivantes :
a) On sollicite en pression ou en température ladite conduite sous-marine (1) en un point de la conduite sous-marine, appelé point de sollicitation, par exemple au moyen d'un système capable de modifier la pression interne de la conduite de façon cyclique
b) On mesure la déformation de ladite conduite sous-marine (1) en au moins un point de mesure (PM1, PM2) au moyen du procédé selon l'une des revendications précédentes ;
c) On détermine la présence d'un bouchon (8) entre le point de sollicitation en pression ou température et ledit point de mesure (PM1, PM2) si la déformation de ladite conduite sous-marine (1) audit au moins un point de mesure n'est pas synchrone avec ladite sollicitation en pression ou en température.

10. Procédé de détermination de la présence d'un bouchon selon la revendication 9, dans lequel on détermine une absence de bouchon (8) entre le point de sollicitation en pression ou température et ledit point de mesure (PM1, PM2) si la déformation de ladite conduite sous-marine (1) audit au moins un point de mesure est synchrone avec ladite sollicitation en pression ou en température.

11. Procédé de détermination de la présence d'un bouchon selon l'une des revendications 9 ou 10, dans lequel on détermine la position d'un bouchon (8) dans ladite conduite sous-marine en réalisant plusieurs mesures de déformation en plusieurs points de mesures (PM1, PM2), ledit bouchon (8) étant situé entre deux points de mesure (PM1, PM2) pour lesquels lesdites déformations de ladite conduite sous-marine (1) sont distinctes.

## Patentansprüche

1. Verfahren zum Messen der Verformung einer Unterwasser-Pipeline (1), insbesondere einer Pipeline zum Befördern von Kohlenwasserstoffen, wobei die Verformung aus einer Änderung der mechanischen Beanspruchung der Unterwasser-Pipeline (1) resultiert, wobei die Unterwasser-Pipeline (1) mindestens eine Metallschicht (2) umfasst, **dadurch gekennzeichnet, dass** man die folgenden Schritte umsetzt:
a) Man sendet eine elektromagnetische Welle zu der Unterwasser-Pipeline (1) hin aus;
b) man misst die von der Metallschicht (2) der Unterwasser-Pipeline (1) reflektierte elektromagnetische Welle mittels eines Interferometers (I) zu mindestens zwei Zeitpunkten; und
c) man vergleicht die von der Metallschicht (2) der Unterwasser-Pipeline (1) zu den zwei Zeitpunkten reflektierte elektromagnetische Welle, um eine Verformung der Unterwasser-Pipeline (1) zu bestimmen.

2. Messverfahren nach Anspruch 1, wobei das Messverfahren einen vorherigen Schritt der Installation eines optischen Systems, das einen Sender für elektromagnetische Wellen (S) und ein Interferometer (I) aufweist, in der Nähe der Unterwasser-Pipeline (1) umfasst.

3. Messverfahren nach Anspruch 2, wobei das optische System stationär oder mobil ist.

4. Messverfahren nach einem der vorhergehenden Ansprüche, wobei man eine elektromagnetische Welle im Infrarotbereich aussendet, bevorzugt mit einer Wellenlänge zwischen 0,6 und 1,5 µm.

5. Messverfahren nach einem der vorhergehenden Ansprüche, wobei man die reflektierte elektromagnetische Welle mittels eines Michelson-Interferometers (I) misst.

6. Messverfahren nach einem der vorhergehenden Ansprüche, wobei das Messverfahren einen Schritt der Druck- oder Temperaturbeaufschlagung der Unterwasser-Pipeline (1) umfasst, um die Verformung der Unterwasser-Pipeline (1) zu erzeugen.

7. Messverfahren nach Anspruch 6, wobei man die Unterwasser-Pipeline (1) mittels eines Schallemissionssystems (9) mit niedriger Frequenz oder eines Druckfluktuationssystems an einem Ende der Unterwasser-Pipeline druckbeaufschlagt.

8. Messverfahren nach einem der Ansprüche 1 bis 5, bei dem man eine Verformung der Pipeline durch Zersetzung eines in der Unterwasser-Pipeline (1) gebildeten Pfropfens erzeugt.

9. Verfahren zum Bestimmen des Vorhandenseins eines in der Unterwasser-Pipeline (1) gebildeten Pfropfens, insbesondere eines in einer Pipeline zum Befördern von Kohlenwasserstoffen gebildeten Hydrat- und/oder Paraffinpfropfens, bei dem man die folgenden Schritte umsetzt:
a) Man beaufschlagt die Unterwasser-Pipeline (1) in einem Punkt der Unterwasser-Pipeline, Beaufschlagungspunkt genannt, mit Druck oder Temperatur, beispielsweise mittels eines Systems, das in der Lage ist, den Innendruck der Pipeline zyklisch zu ändern;
b) man misst die Verformung der Unterwasser-Pipeline (1) in mindestens einem Messpunkt (PM1, PM2) mittels des Verfahrens nach einem der vorhergehenden Ansprüche;
c) man bestimmt das Vorhandensein eines Pfropfens (8) zwischen dem Druck- oder Temperaturbeaufschlagungspunkt und dem Messpunkt (PM1, PM2), wenn die Verformung der Unterwasser-Pipeline (1) an dem mindestens einen Messpunkt nicht synchron zu der Druck- oder Temperaturbeaufschlagung ist.

10. Verfahren zum Bestimmen des Vorhandenseins eines Pfropfens nach Anspruch 9, bei dem man ein Nichtvorhandensein eines Pfropfens (8) zwischen dem Druck- oder Temperaturbeaufschlagungspunkt und dem Messpunkt (PM1, PM2) bestimmt, wenn die Verformung der Unterwasser-Pipeline (1) an dem mindestens einen Messpunkt synchron zu der Druck- oder Temperaturbeaufschlagung ist.

11. Verfahren zum Bestimmen des Vorhandenseins eines Pfropfens nach einem der Ansprüche 9 oder 10, bei dem man die Position eines Pfropfens (8) in der Unterwasser-Pipeline bestimmt, indem mehrere Verformungsmessungen an mehreren Messpunkten (PM1, PM2) ausgeführt werden, wobei der Pfropfen (8) zwischen zwei Messpunkten (PM1, PM2) liegt, für welche die Verformungen der Unterwasser-Pipeline (1) verschieden sind.

## Claims

1. Method for measuring the deformation of an underwater pipe (1), notably a pipe for conveying hydrocarbons, said deformation resulting from a variation in mechanical stress in said underwater pipe (1), said underwater pipe (1) comprising at least one metallic layer (2), **characterized in that** the following steps are implemented:
a) an electromagnetic wave is emitted towards said underwater pipe (1);
b) the electromagnetic wave reflected by said metallic layer (2) of said underwater pipe (1) is measured by means of an interferometer (I) at at least two moments in time; and
c) said electromagnetic wave reflected by said metallic layer (2) of said underwater pipe (1) at said two moments in time is compared so as to determine a deformation of said underwater pipe (1) .

2. Measurement method according to Claim 1, wherein said measurement method comprises a preliminary step of installing an optical system comprising an electromagnetic wave emitter (S) and an interferometer (I) in the vicinity of said underwater pipe (1).

3. Measurement method according to Claim 2, wherein said optical system is fixed or mobile.

4. Measurement method according to one of the preceding claims, wherein an electromagnetic wave is emitted in the infrared range, preferably with a wavelength of between 0.6 and 1.5 pm.

5. Measurement method according to one of the preceding claims, wherein the reflected electromagnetic wave is measured by means of an interferometer (I) of the Michelson type.

6. Measurement method according to one of the preceding claims, wherein said measurement method comprises a step of subjecting said underwater pipe (1) to pressure or temperature loading so as to generate said deformation of said underwater pipe (1).

7. Measurement method according to Claim 6, wherein said underwater pipe (1) is subjected to pressure loading by means of a system (9) for low-frequency acoustic emission or pressure fluctuation at an end of said underwater pipe.

8. Measurement method according to one of Claims 1 to 5, wherein a deformation of said pipe is generated by dissociation of a plug formed in said underwater pipe (1).

9. Method for determining the presence of a plug formed in said underwater pipe (1), notably a hydrate and/or paraffin plug formed in a pipe for conveying hydrocarbons, wherein the following steps are implemented:
a) said underwater pipe (1) is subjected to pressure or temperature loading at a point of the underwater pipe, called loading point, for example by means of a system capable of modifying the internal pressure of the pipe in a cyclic manner;
b) the deformation of said underwater pipe (1) is measured at at least one measurement point (PM1, PM2) by means of the method according to one of the preceding claims;
c) the presence of a plug (8) between the pressure or temperature loading point and said measurement point (PM1, PM2) is determined if the deformation of said underwater pipe (1) at said at least one measurement point is not synchronous with said pressure or temperature loading.

10. Method for determining the presence of a plug according to Claim 9, wherein an absence of a plug (8) between the pressure or temperature loading point and said measurement point (PM1, PM2) is determined if the deformation of said underwater pipe (1) at said at least one measurement point is synchronous with said pressure or temperature loading.

11. Method for determining the presence of a plug according to one of Claims 9 or 10, wherein the position of a plug (8) in said underwater pipe is determined by carrying out several deformation measurements at several measurement points (PM1, PM2), said plug (8) being situated between two measurement points (PM1, PM2) for which said deformations of said underwater pipe (1) are different.
